# EUROPEAN PATENT SPECIFICATION

(11) **EP 4 575 855 B1**
(45) Date of publication and mention of the grant of the patent: **17.06.2026**
(21) Application number: 24217113.0
(22) Date of filing: 03.12.2024
(51) Int. Cl.: G06F 21/53, G06F 9/455, G06F 21/77

(54) **VIRTUAL MACHINE ARCHITECTURE COMPRISING A SECURE ELEMENT, SECURE ELEMENT AND CORRESPONDING METHOD FOR ACCESSING THE SECURE ELEMENT**
VIRTUELLE MASCHINENARCHITEKTUR MIT EINEM SICHEREN ELEMENT, SICHERES ELEMENT UND ZUGEHÖRIGES VERFAHREN ZUM ZUGRIFF AUF DAS SICHERE ELEMENT
ARCHITECTURE DE MACHINE VIRTUELLE COMPRENANT UN ÉLÉMENT SÉCURISÉ, ÉLÉMENT SÉCURISÉ ET PROCÉDÉ D'ACCÈS À L'ÉLÉMENT SÉCURISÉ CORRESPONDANT

(30) Priority: 20.12.2023 IT 202300027306
(43) Date of publication of application: 25.06.2025
(73) Proprietor: STMicroelectronics International N.V., 1228 Plan-les-Ouates, Geneva (CH)
(72) Inventor: DUMELLA DE ROSA, Gennaro, I-80145 Napoli (IT); TERRONE, Luigi, I-84086 Roccapiemonte (Salerno) (IT); ALFARANO, Marco, I-80078 Pozzuoli (Napoli) (IT); VENEROSO, Amedeo, I-81100 Caserta (IT)
(74) Representative: Buzzi, Notaro & Antonielli d'Oulx S.p.A.

(56) References cited:
- US-A1- 2006 174 352
- IDEMIA ET AL: "? Addition of LSEs and LSIs", vol. SET - SET-WG-T, 1 December 2021 (2021-12-01), pages 1 - 5, XP014435027, Retrieved from the Internet <URL:ftp://docbox.etsi.org/SET/SET-WG-T/05-CONTRIBUTIONS/2022/2022_05_03_PL_SETTEC%2397/SCPTEC(21)000183_CR_102_241_R17_Addition_of_LSEs_and_LSIs.docx> [retrieved on 20211201]
- "Smart Cards; UICC Application Programming Interface (UICC API) for Java Card (TM) (Release 17)", vol. SET TEC, no. V17.5.1, 13 September 2023 (2023-09-13), pages 1 - 48, XP014470192, Retrieved from the Internet <URL:http://www.etsi.org/deliver/etsi_ts/102200_102299/102241/17.05.01_60/ts_102241v170501p.pdf> [retrieved on 20230913]

## Description

### Technical field

The description relates to an architecture comprising a set of guest virtual machines supervised by a hypervisor running on a host computer, on which respective instances of a guest operative system, in particular Linux or Linux-Android operative system, are executed, such architecture comprising at least a Secure Element accessible by said set of virtual machines.

One or more embodiments can be applied to Secure Element in integrated circuit cards such as, for instance, Universal Integrated Circuit Cards, UICCs or embedded UICCs, eUICCs.

### Background

In technical fields such as the automotive field, the Android architecture is requested to support multiple instances of Linux (or Linux-Android) executing in parallel.

A virtual machine architecture, i.e. an architecture comprising a set of virtual machines hosted, or supervised, i.e. managed, by a so-called hypervisor, i.e. a virtual machine monitor, on which respective instances of an operative system are executed, may be used. In this environment, if at least a Secure Element, i.e., a tamper-resistant platform (typically a one chip secure microcontroller) capable of securely hosting applications and their confidential and cryptographic data, in particular in accordance with the rules and security requirements set forth by a set of well-identified trusted authorities, is comprised in the architecture, a same Secure Element shall be accessible, in terms of cryptographic services and cryptographic keys storing services, by different virtual machines.

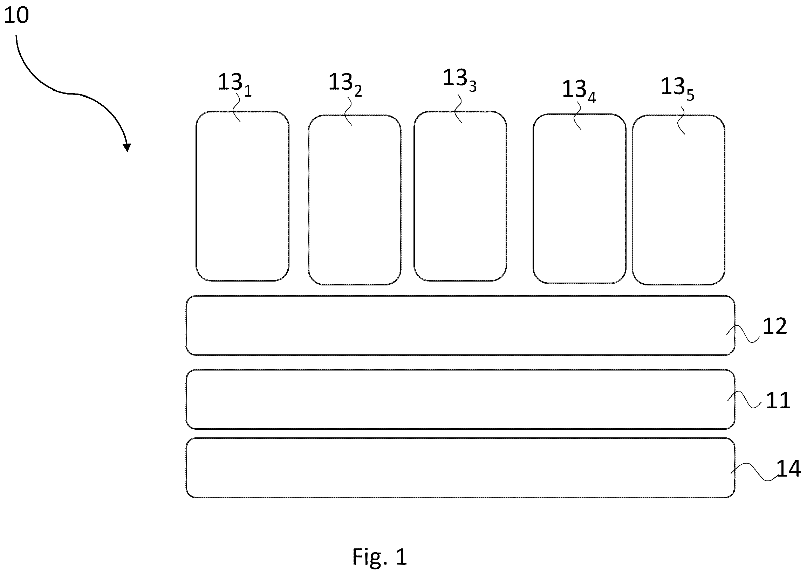

To this regard in figure 1 a virtual machine architecture 10 is shown schematically, which comprises a host 11, e.g., a processing unit, comprising for instance a CPU and volatile and non-volatile memory, then the host 11 hosts a virtual machine monitor 12, also called hypervisor, i.e. a virtual machine monitor which supervises the virtual machines, i.e. it may create and manage the virtual machines. The host 11 in particular corresponds to a processing unit which runs an operating system which runs the hypervisor, i.e. virtual machine monitor 12.

The hypervisor 12, in a manner known per se, by the virtualization process is able to create a set of guest virtual machines each running an instance 13₁...13₅ of an operative system for instance Android. A set refers here to a group of one or more elements, e.g., one or more virtual machines.

A Secure Element 14 is shown associated to the host 11 of the hypervisor 12, which can be represented for instance by an UICC.

Such architecture 10 comprising a set of virtual machines may refer to a terminal, as host, e.g. a user terminal, which is interfaced to an integrated circuit card, e.g. a UICC as mentioned, by a terminal-card, or terminal-UICC interface. In this case, the UICC is assimilated to such Secure Element 14, i.e. embodies such Secure Element 14. Alternatively, embedded UICC (eUICC) or integrated UICC (iUICC) can embody the Secure Element 14, which also may be embodied by an eSE (embedded Secure Element) or an iSE (integrated Secure Element).

The hypervisor 12 used to host multiple virtual machines, may comprise, in the automotive field, e.g., one virtual machine hosting an instance 13ᵢ of the operative system for each display (e.g., dashboard/infotainment).

The hypervisor 12 may run for instance on a System On Chip (SoC) which represents the terminal, i.e., the host 11, interfaced to a secure element or card 14. This in particular in an automotive embodiment, although in general the terminal corresponding to the host 11 can be another device with a processing unit or microcontroller.

In particular a virtual machine architecture as just described represents a multi-application capable terminal, i.e. a terminal that can support more than one first level application with possibly separate user verification requirements for each application. The applications seen by the terminal are first level applications (e.g. SIM, USIM). As defined for instance in the specification ETSI TS 102 221, in this context, i.e., of Secure Elements, e.g., integrated circuit cards or Secure Elements, Logical Secure Element (LSE) are secure element functionalities, applications and files grouped together to act like an independent secure element (e.g. UICC), in particular when multiple Logical Secure Element interfaces are supported, A Logical Secure element Interface (LSI) is instead a logical connection between an endpoint in the terminal, e.g. SoC, running the hypervisor, and one Logical Secure Element or LSE. More specifically each LSE is connected to a LSI, selecting the LSI through the command MANAGE LSI is possible to communicate with the LSE. Thus, the LSI operate as external interfaces.

A mechanism to select multiple application instances at the same time is represented by logical channels, for instance as defined in ISO/IEC 7816-4. Applets to take advantage of multi-session functionality can interoperate from different logical channels and can be selected multiple times in different channels (Multiselectable Applets). For example, the card, or the Secure Element, might handle security information on one logical channel, while data is accessed on a second logical channel, while the third logical channel takes care of data encoding operations. By following this design, it is possible to access information owned by a different applet without having to deselect the currently selected applet that is handling session information. ISO (and then ETSI) defines a maximum of 20 logical channel.

Thus, for instance within the environment of the specification ETSI TS 102 221 it is possible to operate with Multiple Instances and Multiselectable Applets. It is in particular possible to create multiple instances of an Applet with different AIDs (Application Identifiers). As mentioned, Multiselectable Applets are Applets having the capability of being selected on multiple logical channels at the same time.

In the specification ETSI TS 102 221 is introduced a solution with the Logical Secure Interfaces (LSI) and Logical Secure Element (LSE), which defines a clear division between the various Logical Secure Elements. Each Logical Secure Element acts and is handled by the terminal/host like a separate Secure Element. Each Logical Secure Element operates logically independently from the others.

Thus, it is known to use logical channels, where one instance of an applet is shared among all logical channels, and Multiple Instances of the Applet, one for each user. There is a unique application java context. Logical channel context is not the application context.

For the Multiple Instances, Java card context is associated to package. So it is the same for all instances. Instances must have a different AID (Application Identifier), which is a problem as the fixed AID is handled by the Hardware Abstraction Layer front and back ends in the terminal which provides software routines that provide programs with access to the hardware resources represented by the Secure Element.

The Logical Secure Element may solve the context and AID problem, but introduces a memory footprint problem due to loading same ELF (Executable Load File) multiple times (in different LSE). The ELF is the container in the Secure Element of the executable code of the applications, which are instead Executable Modules.

In other words, there is a waste of resources in case the same binary (Executable Load File) is loaded in each Logical Secure Element (footprint problem), the Logical Secure Element mechanism being thus sufficient to deliver the product but is not efficient.

Also there is no division of roles between the entity which provides the shared content (ELF Provider), capable of loading/updating/deleting ELFs and the entity that receives the shared content, here called an Operational Logical Secure Element, linked to the shared ELF.

The documents IDEMIA ET AL: "? Addition of LSEs and LSls",ETSIDRAFT;SCPTEC(21)000183_CFl_102_241_R17_ADD|T| ON_OF_LSES_AND_LS|S, ETSI, 1 December 2021, pages 1-5, US 2006/174352 A1, *"*Smart Cards; UICC Application Programming Interface (UICC API) for Java Card (TM) (Release 17)", ETSI, no. V17.5.1, 13 September 2023, pages 1-48, also represent documents relevant to the technology background described above.

### Object and summary

An object of one or more embodiments is to contribute in providing solutions reducing the memory footprint while using a set of Logical Secure Elements in a virtual machine architecture.

According to one or more embodiments, that object is achieved via a virtual machine architecture having the features set forth in the claims that follow.

One or more embodiments concern a corresponding Secure Element and corresponding method of managing a Secure Element in a virtual machine architecture.

The claims are an integral part of the technical teaching provided in respect of the embodiments.

Solutions as described herein include a virtual machine architecture comprising a set of guest virtual machines supervised by a hypervisor running on a host, on which respective instances of a guest operative system, in particular Android operative system, are executed, said architecture comprising at least a secure element accessible by said set of virtual machines,
said architecture comprising a set of Logical Secure Elements in said Secure Element,
wherein
said architecture comprises among said Logical Secure Elements an administrative Logical Secure Element configured to perform administrative commands, and in which is uploaded a shared Java Card package, said administrative commands performing operations of extradition of instances of applications in said shared Java Card package in other Logical Secure Elements in said set and managing said application instances in said package and extradited.

In various embodiments, said operations of extradition comprise installing to extradite application instances from said administrative Logical Secure Element to other Logical Secure Elements in said set, and said managing comprise managing an upgrade on said package in said administrative Logical Secure Element having application instances in other Logical Secure Elements and deleting said package in said administrative Logical Secure Element and the corresponding application instances in said other Logical Secure Elements.

In various embodiments, said architecture is configured to perform an installation of LSE Security Domain roots by performing an installation of a LSE Security Domain roots in the administrative Logical Secure Element then performing an installation for extradition of said LSE Security Domain root in other Logical Secure Elements.

In various embodiments, each Logical Secure Element is associated with a Security Domain Root with a unique application identifier which is not seen by the guest operating systems, to allow the administrative Logical Secure Element to perform said administrative operations, in particular extradite applications, using the LSE Security Domain Root corresponding to said unique application identifier, said Security Domain Root being configured to perform Card Content Management.

In various embodiments, said administrative Logical Secure Element is installed before the other Logical Secure Elements.

Solutions as described herein refer also to a Secure Element operating with a virtual machine architecture according to embodiments.

Solutions as described herein refer also to a method for managing access to a Secure Element in a virtual machine architecture comprising a set of guest virtual machines supervised by a hypervisor running on a host, on which respective instances of a guest operative system, in particular Android operative system, are executed, said method comprising providing a set of Logical Secure Elements said Secure Element,
providing among said Logical Secure Elements an administrative Logical Secure Element performing administrative commands, uploading a shared Java Card package in said administrative Logical Secure Element, said administrative commands performing operations of extradition of instances of applications in said shared Java Card package in other Logical Secure Elements in said set and managing said application instances in said package and extradited.

In various embodiments, said operations of extradition comprise installing to extradite application instances from said administrative Logical Secure Element to other Logical Secure Elements in said set, and said managing comprise managing an upgrade on said package in said administrative Logical Secure Element having application instances in other Logical Secure Elements and deleting said package in said administrative Logical Secure Element and the corresponding application instances in said other Logical Secure Elements.

In various embodiments, the method comprises installing LSE Security Domain roots by performing an installation of a LSE Security Domain root in the administrative Logical Secure Element then performing an installation for extradition of said LSE Security Domain root in other Logical Secure Elements.

In various embodiments, each Logical Secure Element is associated with a Security Domain Root with a unique application identifier which is not seen by the guest operating systems, to allow the administrative Logical Secure Element to extradite applications using the LSE Security Domain Root corresponding to said unique application identifier, said Security Domain Root performing Card Content Management.

Solutions as described herein refer also to a method for managing access to a Secure Element in a virtual machine architecture comprising a set of guest virtual machines supervised by a hypervisor running on a host computer, comprising the operations according to embodiments.

Solutions as described herein facilitate accessing the LSEs maintaining a low memory footprint.

### Brief description of the figures

One or more embodiments will now be described, by way of example only, with reference to the annexed figures, wherein:
- Figure 1 has been described in the foregoing;
- Figure 2, shows schematically Logical Secure Elements in Secure Element operating in a virtual machine architecture, in a first configuration according to an embodiment of the solution here described;
- Figure 3, shows schematically Logical Secure Elements in Secure Element operating in a virtual machine architecture, in a second configuration according to an embodiment of the solution here described;
- Figure 4 shows schematically Logical Secure Elements in Secure Element operating in a virtual machine architecture, in a third configuration according to an embodiment of the solution here described

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular configurations, structures, or characteristics may be combined in any adequate way in one or more embodiments.

The headings/references used herein are provided merely for convenience and hence do not define the extent of protection or the scope of the embodiments.

For simplicity and ease of explanation, throughout this description, and unless the context indicates otherwise, like parts or elements are indicated in the various figures with like reference signs, and a corresponding description will not be repeated for each and every figure.

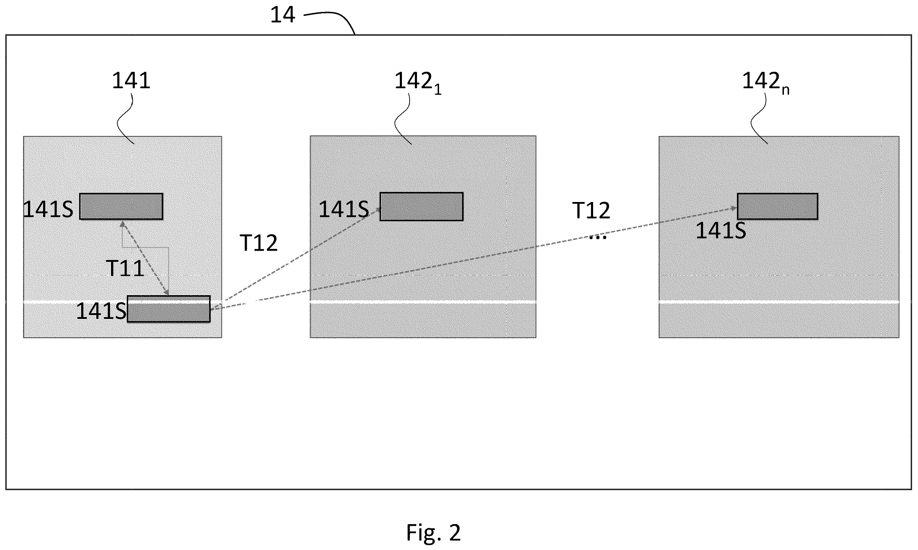

With reference to figure 2, the solution here described provides a solution providing in the Secure Element 14 comprised in the virtual machine architecture 10 of figure 1 a set of Logical Secure Elements, 141, 142₁...142ₙ. Such set of Logical Secure Elements, 141, 142₁...142ₙ comprises an administrative logical Element 141, while the other Logical Secure Elements are Operational Logical Secure Elements 142₁...142ₙ.

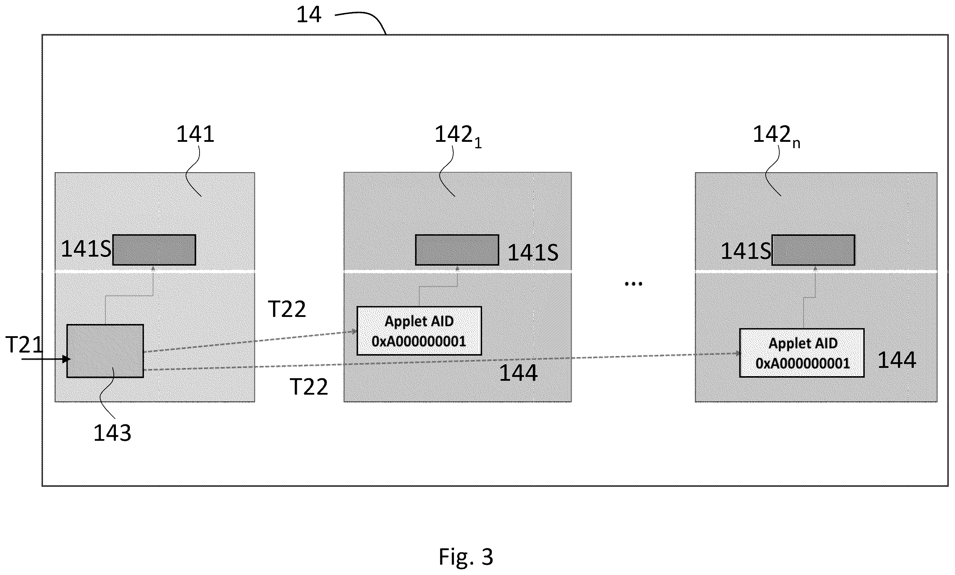

According to the solution here described the administrative logical Element 141 is configured to perform administrative commands. Also in such administrative logical Element 141 a shared Java Card package is uploaded (indicated with 143 in figure 3) having instances extradited in the other Operational Logical Secure Elements 142₁...142ₙ. In this context, the abovementioned shared package 143 is a package comprising the executable code of the applications, in particular the ELF.

The administrative logical Element 141 has the same isolation properties as the other Operational Logical Secure Elements 142₁...142ₙ, i.e. the administrative logical Element 141 acts and is handled by the terminal/host 11 like a separate Secure Element. However, each Operational Logical Secure Element 142₁...142ₙ also operates logically independently from the others, as the Logical Secure Element defined in the Specification 102.221. All Logical Secure Elements, 141, 142₁...142ₙ are thus accessed through respective Logical Secure Interface (LSI), not shown in Figure 2.

The administrative logical Element 141 however as mentioned is configured to perform, i.e., execute, a set of administrative commands, in particular GlobalPlatform commands, which allow it to overcome the logical barrier defined between the Logical Secure Elements through the access through the LSI.

In particular, such set of administrative commands comprises the following three commands:
a first command to perform the extradition application instances from said administrative Logical Secure Element 141 to the other Logical Secure Elements, 142₁...142ₙ; this command may correspond to INSTALL[for extradition] such as defined in GlobalPlatform Card Specification 2.3.1;
a second command for managing an upgrade on such package 143 in the administrative Logical Secure Element 141 having instances in other Logical Secure Elements 142₁...142ₙ, i.e. for managing an upgrade of the ELF; this command may correspond to MANAGE ELF UPGRADE as per GlobalPlatform Executable Load File Upgrade 1.1;
a third command for deleting said package in said administrative Logical Secure Element 141 and the corresponding application instances in said other Logical Secure Elements 142₁...142ₙ. This also may be in the form of DELETE (object and related object)in GlobalPlatform Card Specification 2.3.1 (specifically in paragraph 5.2.1.2 and 11.2.2.2). To this regard the Global Platform command DELETE can be performed on a package with option P2=0x80 which means: Delete object and related object. In this way, not only the package but also all Applications instantiated from it, are deleted.

Thus, this performs deletion of a shared package which delete also all the instances in all Logical Secure Elements 141, 142₁...142ₙ, i.e. including the administrative Logical Secure Element 141.

The administrative Logical Secure Element 141 is then configured to operate the same other operations (e.g., SELECT, GET STATUS, etc.) as defined by the ETSI specification, i.e., its visibility is limited to its context (and not includes the other LSE).

According to embodiment of the solution here described, the administrative Logical Secure Element 141 is the first Logical Secure Element installed on the secure element 14, and it is used to configure all the other LSEs as better explained with reference to figures 2-4.

Each LSE 141, 142₁...142ₙ is associated with a Security Domain Root (LSE-SDR) 141S. As known, the Security Domain is an application which is installed at the beginning in the SE, or LSE in this case. While the Issuer Security Domain (ISD) manages the card content with respect to the issuer, in this case the LSE-SDR is the only entity in the LSEs to have a unique Application Identifier, e.g. 0xA0000000001, indicated with 144, in figure 2, which allows the the administrative Logical Secure Element 141 to correctly extradite applications. LSE-SDR 141s are hidden by the high-level, or first level, of the operative systems 13i because the such first level only communicate with well-known AID application, i.e. applications with AID which are already known to the HAL, thus when a high level call from an Android application is managed by the corresponding HAL, the related AID is referenced.

LSEs-SDR 141a are used for Card Content Management.

Thus, the LSE-SDR 141s are not used by the guest operating systems 13i since such guest operating systems 13i communicate only first level applications, i.e., applet with an AID known to the first level. The unique AID 144 is an AID specifically defined for the operation of the administrative Logical Secure Element 141, not recognized by the first level of guest operating systems 13i.

The LSE-SDR 141s have a unique application identifier 144, since they are used to operate card content management of the Logical Secure Element 141, 142.

In figure 2 it is shown as mentioned a first configuration of the Secure Element 14, e.g., an eUICC, associated to the host 11 and accessed by the virtual machines 131...135, which comprises the set of LSEs 141, 12, in a first install operation T11 is installed an LSE_SDR 11S. In this case is used a conventional INSTALL [FOR INSTALL] GlobalPlatform command. Then a second operation of install for extradition T12 is performed inserting Instances of the LSE-SDR 11S in each of the n operational LSE, 142₁...142ₙ.

Then, as shown in figure 3, a shared package, 143, is installed (T21) in the administrative LSE 141 by the host 11, e.g., an ELF, 143 installed, which instances are then extradited T22 in the other LSE 142₁...142ₙ, using the unique AID 144 to access the respective LSE-SDR for managing the card (or SE) content.

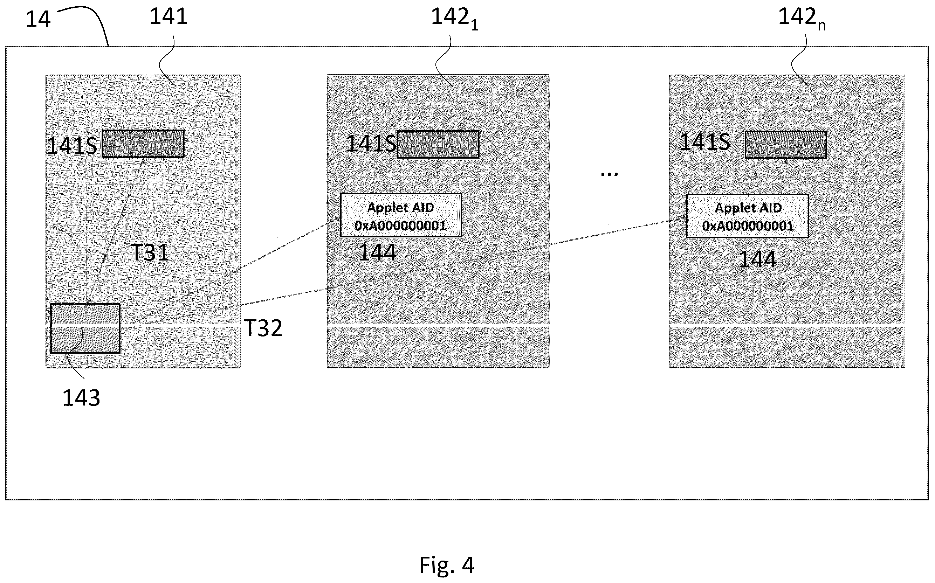

In figure 4, it is shown that the shared package 143 in the Administrative LSE 141 performs an upgrade of the ELF interacting T31 with LSE_SDR Administrative LSE 141 which then manages to apply the upgrading steps, defined for instance by GP 2.3 Amd H spec, T32 to all the other LSE_SDR of LSEs 142 using the unique AID 144 to access the respective LSE-SDR for managing the card (or SE) content.

So it is managed the ELF upgrade which effect is reflected on all applet instances in LSEs 142.

The deletion, not shown in the figures, of a group of a shared packages deletes all the instances in all LSE 12.

Thus, in summary, the virtual machine architecture, e.g., 10, here described, comprising a set of guest virtual machines supervised by a hypervisor, e.g., 12 running on a host, e.g. the processor unit 11 or a microcontroller or a computer, on which respective instances of a guest operative system, e.g., 13ᵢ, in particular Linux or Android Linux operative system, are executed, such architecture comprising at least a secure element, in the example 14, such as a UICC or eUICC or eSE, accessible by said set of virtual machines, said architecture 10 comprising a set of Logical Secure Elements, , e.g., 141, 142₁...142ₙ in said secure element 14, comprises among said Logical Secure Elements 141, 142₁...142ₙ an administrative Logical Secure Element 141. Such administrative Logical Secure Element, with respect to the other Logical Secure Element is further configured to perform administrative commands, e.g., operations T12, T31, T32. In the administrative Logical Secure Element 141 is uploaded a shared Java Card package, e.g., an Executable Load File 143, said administrative commands performing operations of extradition, e.g., T21, T22, of instances of applications in said shared Java Card package 143 in other Logical Secure Elements, e.g., 142₁...142ₙ, in said set and managing, e.g. operations T32, T31, said application instances in said package 143 and extradited, i.e. the instances of the packages 143 installed by extradition in the other Logical Secure Elements, e.g., 142₁...142ₙ.

Such operations of extradition comprise installing, e.g., T22, to extradite application instances from said administrative Logical Secure Element, 141 to other Logical Secure Elements, 142₁...142ₙ, in said set, and performing said managing, e.g., T31, T32, comprises managing an upgrade, e.g., ELF UPGRADE, on said package, e.g. ELF 143), in said administrative Logical Secure Element, 141, having application instances in other Logical Secure Elements 142₁...142ₙ, and deleting said package, e.g., 143 in the administrative Logical Secure Element, 141 and the corresponding application instances in the other Logical Secure Elements, 142₁...142ₙ.

According to another aspect of the solution the Secure Element, 14, is configured to perform an installation of LSE Security Domain roots, e.g., 141S, i.e. roots of specific Security Domain to operate with the administrative Logical Secure Element, by performing an installation of a LSE Security Domain roots, e.g., 141S, in the administrative Logical Secure Element then performing an installation for extradition of said LSE Security Domain root 141S in other Logical Secure Elements, e.g., 142₁...142ₙ.

Also each Logical Secure Element, 142₁...142ₙ, is associated with a Security Domain Root, e.g., 141S, with a unique application identifier, e.g., 144, which is not seen by the guest operating systems 13ᵢ. In other words, the identifier 144 can be reached even if LSE-SDR 141S is not known by the virtual machine as a first level application. This to allow the administrative Logical Secure Element, 141, to perform administrative operations, in particular, extradition of applications using the LSE Security Domain Root 141S corresponding to said unique application identifier 144, said Security Domain Root being configured to perform Card Content Management.

Solutions as described herein, due to shared package or ELF, allow to decrease the memory footprint.

Then, due to the introduction of the administrative Logical Secure Element, it is introduced a privileged user that can perform administrative commands across all other Logical Secure Elements.

Without prejudice to the underlying principles, the details and the embodiments may vary, even significantly, with respect to what has been described by way of example only without departing from the scope of the embodiments.

The whole (virtual machines and hypervisor) architecture may comprise more than one secure element (for example eUICC and eSE), which can be accessed by different subset of guest operating system running in corresponding virtual machines.

As mentioned the solution preferably applies to Secure Elements according to the specification ETSI TS 102 221 and may use commands within the meaning of GlobalPlatform Card Specification.

The extent of protection is determined by the annexed claims.

## Claims

1. A virtual machine architecture (10) comprising a set of guest virtual machines supervised by a hypervisor (12) running on a host (11), on which respective instances of a guest operative system (13ᵢ), in particular Android operative system, are executed, said architecture comprising at least a Secure Element (14) accessible by said set of virtual machines,
said architecture comprising a set of Logical Secure Elements (141, 142₁...142ₙ) in said Secure Element (14),
wherein
said architecture comprises (10) among said Logical Secure Elements (141, 142₁...142ₙ) an administrative Logical Secure Element (141) configured to perform administrative commands (T12, T31, T32), and in which is uploaded a shared Java Card package (143), said administrative commands performing operations of extradition (T21, T22) of instances of applications in said shared Java Card package (143) in other Logical Secure Elements (142₁...142ₙ) in said set and managing (T32, T31) said application instances in said package and extradited.

2. An architecture (10) according to claim 1, wherein said administrative Logical Secure Element (141) configured to perform said operations of extradition (T21, T22) is configured to install to extradite (T22) application instances from said administrative Logical Secure Element (141) to other Logical Secure Elements (142₁...142ₙ) in said set, and configured to perform said operation of managing (T31, T32) comprising managing an upgrade (ELF UPGRADE) on said package (143) in said administrative Logical Secure Element (141) having application instances in other Logical Secure Elements (142₁...142ₙ) and configured to delete said package (143) in said administrative Logical Secure Element (141) and the corresponding application instances in said other Logical Secure Elements (142₁...142ₙ).

3. An architecture (10) according to claim 1 or 2, configured to perform an installation of LSE Security Domain roots (141S) by performing an installation of a LSE Security Domain roots (141S) in the administrative Logical Secure Element then performing an installation for extradition of said LSE Security Domain root (141S) in other Logical Secure Elements (142₁...142ₙ).

4. An architecture (10) according to the previous claim, wherein each Logical Secure Element (142₁...142ₙ) is associated with a Security Domain Root (141S) with a unique application identifier (144) which is not seen by the guest operating systems (13ᵢ), to allow the administrative Logical Secure Element (141) to perform said administrative operations, in particular extradite applications, using the LSE Security Domain Root (141S) corresponding to said unique application identifier (144), said Security Domain Root being configured to perform Card Content Management.

5. An architecture (10) according to any of the previous claims, wherein said administrative Logical Secure Element (141) is installed before the other Logical Secure Elements.

6. A Secure Element operating with a virtual machine architecture (10) according to any of claim 1 to 5.

7. A method for managing access to a Secure Element (14) in a virtual machine architecture (10) comprising a set of guest virtual machines managed by a hypervisor (12) running on a host (11), on which respective instances of a guest operative system (13ᵢ), in particular Android operative system, are executed, said method comprising providing a set of Logical Secure Elements (141, 142₁...142ₙ) in said Secure Element (14),
providing among said Logical Secure Elements (141, 142₁...142ₙ) an administrative Logical Secure Element (141), the method comprising performing at the administrative Logical Secure Element (141) administrative commands (T12, T31, T32),
uploading a shared Java Card package (143) in said administrative Logical Secure Element (141), said administrative commands performing operations of extradition (T21, T22) of instances of applications in said shared Java Card package (143) in other Logical Secure Elements (142₁...142ₙ) in said set and
managing (T32, T31) said application instances in said package and extradited.

8. A method according to claim 7, wherein said operations of extradition (T21, T22) comprise installing (T22) to extradite application instances from said administrative Logical Secure Element (141) to other Logical Secure Elements (142₁...142ₙ) in said set, and said managing (T31, T32), comprise managing an upgrade (ELF UPGRADE) on said package (143) in said administrative Logical Secure Element (141) having application instances in other Logical Secure Elements (142₁...142ₙ) and deleting said package in said administrative Logical Secure Element (141) and the corresponding application instances in said other Logical Secure Elements (142₁...142ₙ).

9. A method according to claim 8, comprising installing LSE Security Domain roots (141S) by performing an installation of a LSE Security Domain root (141S) in the administrative Logical Secure Element then performing an installation for extradition of said LSE Security Domain root (141S) in other Logical Secure Elements (142₁...142ₙ),.

10. A method according to the previous claim, wherein each Logical Secure Element (142₁...142ₙ) is associated with a Security Domain Root (141S) with a unique application identifier (144) which is not seen by the guest operating systems (13ᵢ), to allow the administrative Logical Secure Element (141) to extradite applications using the LSE Security Domain Root (141S) corresponding to said unique application identifier (144), said Security Domain Root performing Card Content Management.

## Patentansprüche

1. Architektur (10) für virtuelle Maschinen, die einen Satz virtueller Gastmaschinen umfasst, die von einem Hypervisor (12) überwacht werden, der auf einem Host (11) läuft, auf dem entsprechende Instanzen eines Gastbetriebssystems (13ᵢ), insbesondere eines Android-Betriebssystems, ausgeführt werden, wobei die Architektur mindestens ein Sicherheitselement (14) umfasst, auf das der Satz virtueller Maschinen zugreifen kann,
wobei die Architektur einen Satz logischer Sicherheitselemente (141, 142₁ ...142ₙ) in dem Sicherheitselement (14) umfasst,
wobei
die Architektur (10) unter den logischen Sicherheitselementen (141, 142₁ ...142ₙ) ein administratives logisches Sicherheitselement (141) umfasst, das so konfiguriert ist, dass es administrative Befehle (T12, T31, T32) ausführt, und in das ein gemeinsam genutztes Java Card-Paket (143) hochgeladen ist, wobei die administrativen Befehle Operationen zur Auslieferung (T21, T22) von Anwendungsinstanzen in dem gemeinsam genutzten Java Card-Paket (143) in andere logische Sicherheitselemente (142₁ ...142ₙ) in dem Satz durchführen und die Anwendungsinstanzen in dem Paket und ausgelieferten Instanzen verwalten (T32, T31).

2. Architektur (10) nach Anspruch 1, wobei das administrative logische Sicherheitselement (141), das so konfiguriert ist, dass es die Operationen zur Auslieferung (T21, T22) durchführt, so konfiguriert ist, dass es zum Ausliefern (T22) von Anwendungsinstanzen aus dem administrativen logischen Sicherheitselement (141) in andere logische Sicherheitselemente (142₁...142ₙ) in dem Satz installiert ist, und so konfiguriert ist, dass es die Verwaltungsoperation (T31, T32) durchführt, die das Verwalten eines Upgrades (ELF UPGRADE) an dem Paket (143) in dem administrativen logischen Sicherheitselement (141) umfasst, das Anwendungsinstanzen in anderen logischen Sicherheitselementen (142₁...142ₙ) aufweist, und so konfiguriert ist, dass es das Paket (143) in dem administrativen logischen Sicherheitselement (141) und die entsprechenden Anwendungsinstanzen in den anderen logischen Sicherheitselementen (142₁...142ₙ) löscht.

3. Architektur (10) nach Anspruch 1 oder 2, die so konfiguriert ist, dass sie eine Installation von LSE-Sicherheitsdomänenstämmen (141S) durchführt, indem sie eine Installation eines LSE-Sicherheitsdomänenstamms (141S) in dem administrativen logischen Sicherheitselement durchführt und dann eine Installation zur Auslieferung des LSE-Sicherheitsdomänenstamms (141S) in andere logische Sicherheitselemente (142₁...142ₙ) durchführt.

4. Architektur (10) nach dem vorhergehenden Anspruch, wobei jedes logische Sicherheitselement (142₁...142ₙ) einem Sicherheitsdomänenstamm (141S) mit einer eindeutigen Anwendungskennung (144) zugeordnet ist, die von den Gastbetriebssystemen (13ᵢ) nicht gesehen wird, um es dem administrativen logischen Sicherheitselement (141) zu ermöglichen, diese administrativen Operationen, insbesondere ausgelieferte Anwendungen, unter Verwendung des der eindeutigen Anwendungskennung (144) entsprechenden LSE-Sicherheitsdomänenstamms (141S) durchzuführen, wobei der Sicherheitsdomänenstamm so konfiguriert ist, dass er die Karteninhaltsverwaltung durchführt.

5. Architektur (10) nach einem der vorhergehenden Ansprüche, wobei das administrative logische Sicherheitselement (141) vor den anderen logischen Sicherheitselementen installiert wird.

6. Sicherheitselement, das mit einer Architektur (10) für virtuelle Maschinen nach einem der Ansprüche 1 bis 5 arbeitet.

7. Verfahren zum Verwalten des Zugriffs auf ein Sicherheitselement (14) in einer Architektur (10) für virtuelle Maschinen, umfassend einen Satz virtueller Gastmaschinen, die von einem Hypervisor (12) verwaltet werden, der auf einem Host (11) läuft, auf dem entsprechende Instanzen eines Gastbetriebssystems (13ᵢ), insbesondere Android-Betriebssystems, ausgeführt werden, wobei das Verfahren das Bereitstellen eines Satzes logischer Sicherheitselemente (141, 142₁...142ₙ) in dem Sicherheitselement (14) und
das Bereitstellen eines administrativen logischen Sicherheitselements (141) unter den logischen Sicherheitselementen (141, 142₁...142ₙ) umfasst, wobei das Verfahren das Durchführen von administrativen Befehlen (T12, T31, T32) am administrativen logischen Sicherheitselement (141) umfasst,
Hochladen eines gemeinsam genutzten Java Card-Pakets (143) in das administrative logische Sicherheitselement (141), wobei die administrativen Befehle Operationen zur Auslieferung (T21, T22) von Anwendungsinstanzen in dem gemeinsam genutzten Java Card-Paket (143) in andere logische Sicherheitselemente (142₁ ...142ₙ) in dem Satz durchführt und
die Anwendungsinstanzen in dem Paket und ausgelieferte Instanzen verwaltet (T32, T31).

8. Verfahren nach Anspruch 7, wobei die Auslieferungsoperationen (T21, T22) das Installieren (T22) zum Ausliefern von Anwendungsinstanzen aus dem administrativen logischen Sicherheitselement (141) an andere logische Sicherheitselemente (142₁...142ₙ) in dem Satz umfassen und das Verwalten (T31, T32) das Verwalten eines Upgrades (ELF UPGRADE) des Pakets (143) in dem administrativen logischen Sicherheitselement (141), das Anwendungsinstanzen in anderen logischen Sicherheitselementen (142₁...142ₙ) aufweist, und das Löschen des Pakets in dem administrativen logisch Sicherheitselement (141) und der entsprechenden Anwendungsinstanzen in den anderen logisch Sicherheitselementen (142₁...142ₙ) umfasst.

9. Verfahren nach Anspruch 8, umfassend das Installieren von LSE-Sicherheitsdomänenstämmen (141S), indem eine Installation eines LSE-Sicherheitsdomänenstamms (141S) in dem administrativen logischen Sicherheitselement durchgeführt wird und anschließend eine Installation zur Auslieferung des LSE-Sicherheitsdomänenstamms (141S) in andere logische Sicherheitselemente (142₁...142ₙ) durchgeführt wird.

10. Verfahren nach dem vorhergehenden Anspruch, wobei jedes logische Sicherheitselement (142₁...142ₙ) einem Sicherheitsdomänenstamm (141S) mit einer eindeutigen Anwendungskennung (144) zugeordnet ist, die von den Gastbetriebssystemen (13ᵢ) nicht gesehen wird, um es dem administrativen logischen Sicherheitselement (141) zu ermöglichen, Anwendungen unter Verwendung des der eindeutigen Anwendungskennung (144) entsprechenden LSE-Sicherheitsdomänenstamms (141S) auszuliefern, wobei der Sicherheitsdomänenstamm die Karteninhaltsverwaltung durchführt.

## Revendications

1. Architecture de machine virtuelle (10) comprenant une série de machines virtuelles invitées supervisées par un hyperviseur (12) fonctionnant sur un hôte (11), sur laquelle des instances respectives d'un système d'exploitation invité (13ᵢ), en particulier un système d'exploitation Android, sont exécutées, ladite architecture comprenant au moins un élément de sécurité (14) accessible par ladite série de machines virtuelles,
ladite architecture comprenant une série d'éléments de sécurité logiques (141, 142₁...142ₙ) dans ledit élément de sécurité (14),
dans lequel
ladite architecture comprend (10) parmi lesdits éléments de sécurité logiques (141, 142₁...142ₙ) un élément de sécurité logique administratif (141) configuré pour réaliser des commandes administratives (T12, T31, T32), et dans lequel est téléchargé un package Java Card partagé (143), lesdites commandes administratives réalisant des opérations d'extradition (T21, T22) d'instances d'applications dans ledit package Java Card partagé (143) dans d'autres éléments de sécurité logiques (142₁...142ₙ) dans ladite série et gérant (T32, T31) lesdites instances d'application dans ledit package et extradées.

2. Architecture (10) selon la revendication 1, dans laquelle ledit élément de sécurité logique administratif (141) configuré pour réaliser lesdites opérations d'extradition (T21, T22) est configuré pour effectuer une installation pour extrader (T22) des instances d'application depuis ledit élément de sécurité logique administratif (141) vers d'autres éléments de sécurité logiques (142₁...142ₙ) dans ladite série, et configuré pour réaliser ladite opération de gestion (T31, T32) comprenant de gérer une mise à niveau (ELF UPGRADE) sur ledit package (143) dans ledit élément de sécurité logique administratif (141) ayant des instances d'application dans d'autres éléments de sécurité logiques (141, 142₁...142ₙ) et configuré pour effacer ledit package (143) dans ledit élément de sécurité logique administratif (141) et les instances d'application correspondantes dans lesdits autres éléments de sécurité logiques (142₁...142ₙ).

3. Architecture (10) selon la revendication 1 ou 2, configurée pour réaliser une installation de racines de domaines de sécurité LSE (141S) en réalisant une installation d'une racine de domaine de sécurité LSE (141S) dans l'élément de sécurité logique administratif réalisant ensuite une installation pour l'extradition de ladite racine de domaine de sécurité LSE (141S) dans d'autres éléments de sécurité logiques (142₁...142ₙ).

4. Architecture (10) selon la revendication précédente, dans laquelle chaque élément de sécurité logique (142₁...142ₙ) est associé à une racine de domaine de sécurité (141S) avec un identificateur d'application unique (144) qui n'est pas vu par les systèmes de gestion d'invité (13ᵢ), pour permettre à l'élément de sécurité logique administratif (141) de réaliser des opérations administratives, en particulier d'extrader des applications, en utilisant la racine de domaine de sécurité LSE (141S) correspondant audit identificateur d'application unique (144), ladite racine de domaine de sécurité étant configurée pour réaliser une gestion de contenu de carte.

5. Architecture (10) selon l'une quelconque des revendications précédentes, dans laquelle ledit élément de sécurité logique administratif (141) est installé avant les autres éléments de sécurité logiques.

6. Élément de sécurité fonctionnant avec une architecture de machine virtuelle (10) selon l'une quelconque des revendications 1 à 5.

7. Procédé de gestion d'accès à un élément de sécurité (14) dans une architecture de machine virtuelle (10) comprenant une série de machines virtuelles invitées gérées par un hyperviseur (12) fonctionnant sur un hôte (11), sur laquelle des instances respectives d'un système d'exploitation invité (13i), en particulier un système d'exploitation Android, sont exécutées, ledit procédé comprenant de fournir une série d'éléments de sécurité logiques (141, 142₁...142ₙ) dans ledit élément de sécurité (14),
de fournir parmi lesdits éléments de sécurité logiques (141, 142₁...142ₙ) un élément de sécurité logique administratif (141), le procédé comprenant de réaliser au niveau de élément de sécurité logique administratif (141) des commandes administratives (T12, T31, T32),
de télécharger un package Java Card partagé (143) dans ledit élément de sécurité logique administratif (141), lesdites commandes administratives réalisant des opérations d'extradition (T21, T22) d'instances d'applications dans ledit package Java Card partagé (143) dans d'autres éléments de sécurité logiques (142₁...142ₙ) dans ladite série et
de gérer (T32, T31) lesdites instances d'application dans ledit package et extradées.

8. Procédé selon la revendication 7, dans lequel lesdites opérations d'extradition (T21, T22) comprennent d'effectuer une installation (T22) pour extrader des instances d'applications depuis ledit élément de sécurité logique administratif (141) vers d'autres éléments de sécurité logiques (142₁...142ₙ) dans ladite série, et ladite gestion (T31, T32), comprend de gérer une mise à niveau (ELF UPGRADE) sur ledit package (143) dans ledit élément de sécurité logique administratif (141) ayant des instances d'application dans d'autres éléments de sécurité logiques (141, 142₁...142ₙ) et d'effacer ledit package dans ledit élément de sécurité logique administratif (141) et les instances d'application correspondantes dans lesdits autres éléments de sécurité logiques (142₁...142ₙ).

9. Procédé selon la revendication 8, comprenant d'installer des de racines de domaines de sécurité LSE (141S) en réalisant une installation d'une racine de domaine de sécurité LSE (141S) dans l'élément de sécurité logique administratif réalisant ensuite une installation pour l'extradition de ladite racine de domaine de sécurité LSE (141S) dans d'autres éléments de sécurité logiques (142₁...142ₙ).

10. Procédé selon la revendication précédente, dans lequel chaque élément de sécurité logique (142₁...142ₙ) est associé à une racine de domaine de sécurité (141S) avec un identificateur d'application unique (144) qui n'est pas vu par les systèmes de gestion d'invité (13ᵢ), pour permettre à l'élément de sécurité logique administratif (141) d'extrader des applications en utilisant la racine de domaine de sécurité LSE (141S) correspondant audit identificateur d'application unique (144), ladite racine de domaine de sécurité réalisant une gestion de contenu de carte.
